# EUROPEAN PATENT APPLICATION

(11) **EP 2 063 234 A2**
(43) Date of publication of application: **27.05.2009**
(21) Application number: 08020483.7
(22) Date of filing: 26.11.2008
(51) Int. Cl.: G01F 3/22, G01F 15/00, G01F 15/06

(54) **Electronic security measuring module for mechanical gas meters with diaphragm**

(30) Priority: 26.11.2007 HU 0700754
(71) Applicant: Korrektométer KFT, Diótörö u. 7. 8315 Gyenesdiás (HU)
(72) Inventor: Simon, Gàbor, 8315 Gyenesdiás (HU)
(74) Representative: Mak, Andras

(57) **Abstract**

Electronic safety measuring arrangement for mechanical gas meters with a diaphragm comprising a pulse generating unit for generating pulses in response to the cyclic changes of a measuring unit performing alternating movement due to gas flow, wherein the number of pulses is equal to the number of cycles, characterized in that the electronic elements and the mechanical elements required for the measurements are integrated in the housing of the gas meter. According to the invention, the electronic elements and the mechanical elements required for the measurements are integrated in the housing of the gas meter.

## Description

### Field of the invention:

The present invention relates to electronic security counting and control module for mechanical gas meters with a diaphragm, comprising means for detecting cyclic movement of its parts, means for generating electric pulses in response to the movement and a unit for counting the pulses.

### Gas metering in practice:

The basis for the accounting of natural gas supplied through pipes is provided by the so called gas meters. Gas meters widely used in practice work using the principle of volumetric displacement. The gas meters comprise a mechanical measuring arrangement accommodated in a closed volume of a housing. Such measuring arrangements let the natural gas coming from a pipeline flow through two measuring chambers by alternatingly closing and opening of valves.

The measuring chambers are separated from one another by a flexible diaphragm. The diaphragm dislocates when pressurized by gas. This movement controls the valves through pushing rods. The repeated opening and closing of the valves causes an alternating movement of the diaphragm.
The alternating movement is transformed to a rotating movement by an excentric element. This rotating movement drives the mechanical counter unit through a stuffing box or a magnetic coupling and by rotating an interposed cogged wheel transmission/gear. The driving rate may be regulated by changing the gear ratio of the cogged wheels. The mechanical counter comprises number-indicating disks. The number shown by the number-indicating disks provides the measuring result. Gas flow meters using the above discussed working principle always show an integrated value, that is the total gas volume flown through the gas meter until that moment. The gas meters are checked and read on a regular basis with a predetermined frequency. The difference of the measuring results read at two different points of time is equivalent to the gas consumption of that period. On the basis of that value a sum to be paid for the service will be determined.

### Background art:

US 4,565,090 discloses a gas meter with a housing of non-magnetic material and a mechanical rotating gas flow measuring element. In order to operate the gas meter, e.g. to detect a gas flow in result of gas consumption the rotating element is equipped with a magnetic material and the housing is equipped with a detector means. An output of the detector means is connected to a display unit. This solution is based on detecting of magnetic field, however it is only capable of determining the functioning and non functioning state and it cannot be used for determining the gas volume flowing through the gas meter.

US 4,848,148 discloses a gas meter with a diaphragm, in which a ferromagnetic material is fixed to the moving part of the diaphragm for causing a change in the outer magnetic field. On the basis of the change of the magnetic field a movement of the diaphragm and the number of the movements is determined. This solution provides for an electronic counting and does not provide any possibility for the result to be verified in any way.

US 6,269,829 describes an adapter for a traditional gas meter as an attachment for enabling digital signal processing. The adapter comprises a microcomputer gas flow signal converting module. The gas flow signal converting module senses the movement of diaphragm of the gas meter and converts the gas flow rate into computerized signals. This solution serves as a replacement, therefore it suggest an electronic equivalent for a mechanical counting. Due to this fact this prior art solution fails to provide a verification function.

### Disclosure of the invention

It is an object of the invention to provide an electronic safety counting and control circuit to be used in mechanically operated gas meters with a diaphragm, which is able to provide an equivalent measuring result, but generate electronically and in a synchronous manner with the verified mechanical counting unit.

Using such an electronic unit - and comparing the two measuring results - it will be possible to evaluate the credibility of the measuring result provided by the mechanical counting unit. The actual gas consumption value can be determined even in case of an erroneous functioning or tampering of the mechanical counting unit.

It is a further object of the invention to provide a control circuit for gas meters that can be used for upgrading existing gas meters and does not require any constructive change in the measuring unit of a conventional gas meter.

These objects of the invention are achieved in most general terms by an electronic safety measuring arrangement to be implemented in a mechanical gas meter with a diaphragm, in which the electronic elements required for the measurement are integrated in the gas meter housing, together with the mechanical elements. Such a solution provides the possibility that the measuring result (reading) of a verified mechanical counting unit of a conventional gas meter can be generated - in a synchronous manner, for security purposes - also electronically, thereby detecting any tampering of the gas meter and providing the actual measuring value of the consumed gas volume.

In present practice, tampering of gas meters is detected by means of seals. On the basis of a damage or change of the seal, the gas suppliers can generally detect a manipulation but the extent of the manipulation, in absence of a true measuring result, cannot be assessed. As the mechanical counter configuration of the gas meter is maintained, the result of the electronic safety counting delivers besides the control possibility also the possibility of having access to the real gas consumption.

In a preferred embodiment of the invention the magnetic transmitter comprises a permanent magnet, and the electromagnetic signal converters comprise REED contact transmitters. The electronic safety control measuring arrangement according to the invention also comprises a storage for storing calibrating values.

According to a first aspect of the invention, a calibrating value for the gas volume corresponding with the total dislocation cycle is stored in the calibrating value storage. At it will be apparent, a cyclic addition of the calibrating values with a repetition number of the whole cycles, an electronic measuring result can be achieved, which is identical with the reading of the mechanical counter.

### Short description of the drawing

The invention will now be described more detailed in connection with the accompanying drawing showing preferred embodiments of the invention. In the drawing:
- Fig. 1: a front view of a conventional mechanical gas meter with a diaphragm;
- Fig. 2: a schematic diagram of a first embodiment of a safety measuring arrangement according to the invention;
- Fig. 3: is a diagram illustrating the function of the measuring arrangement of Fig. 2;
- Fig. 4: a schematic diagram of a second embodiment of a safety measuring arrangement according to the invention;
- Fig. 5: a diagram illustrating the function of the measuring arrangement of Fig. 4;
- Fig. 6: a schematic diagram of a third embodiment of a safety measuring arrangement according to the invention;
- Fig. 7: a diagram illustrating the function of the measuring arrangement of Fig. 6;
- Fig. 8: a schematic block diagram of a control and processing unit used in the safety measuring arrangement according to the invention.

### Description of embodiments

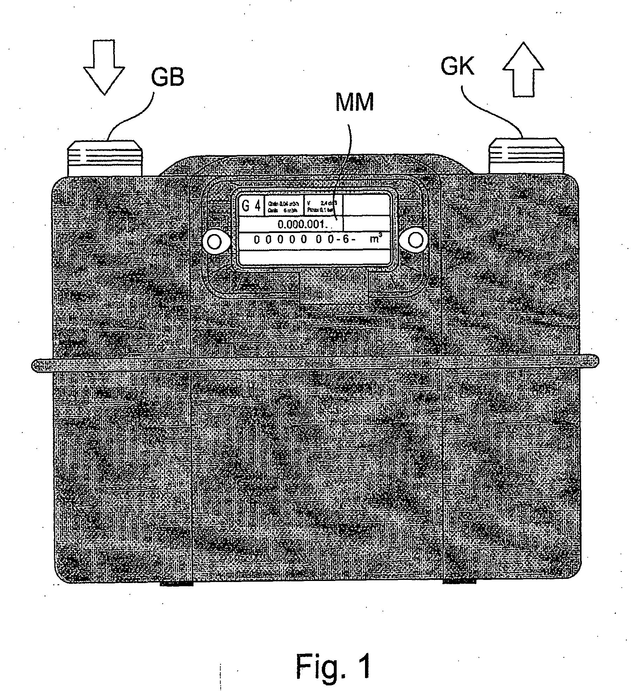

As shown in Fig. 1, a conventional mechanical gas meter comprises a gas inlet GB, a gas outlet GK, a measuring chamber with a diaphragm arranged between the gas inlet and the gas outlet, and further elements connected to the diaphragms and to a rotating disk for converting the alternating movement of the diaphragms to rotating movement. The rotating disk provides an angular rotation in proportion to the gas volume flowing through the measuring chamber. The rotating disk is connected to a mechanical measuring unit MM generally comprising decimal numeric disks connected to each other. A drive unit comprising several gears is inserted between the rotating disk and the mechanical measuring unit, the drive unit having a drive ratio that can be set to a predetermined value by selecting the proper gears. The gas meter can be calibrated or verified by setting the proper drive ratio. The prescribed accuracy of the gas meter can be achieved by calibration. The display shows the measuring result - depending on the measuring limits - with a resolution of 0,001 - 0,1 m³. In an electronic safety measuring arrangement of the invention the electronic elements required for the measurement are integrated in the gas meter housing, together with the mechanical elements, therefore they are not shown in Fig. 1. As the additional safety control measuring arrangement as a whole is located inside the housing of the gas meter in a not visible or perceivable manner for the user, it can be practically excluded that the user will try to change or remove it. It is thereby guaranteed that parallel to the mechanical counting an electronic safety control measuring arrangement is continuously operated, the measuring result of which can be read out cyclically by using an external reading unit when taking periodic readings of the gas meter that enables a control of the measuring value continuously displayed by the mechanical counter that may have been manipulated by the consumer.

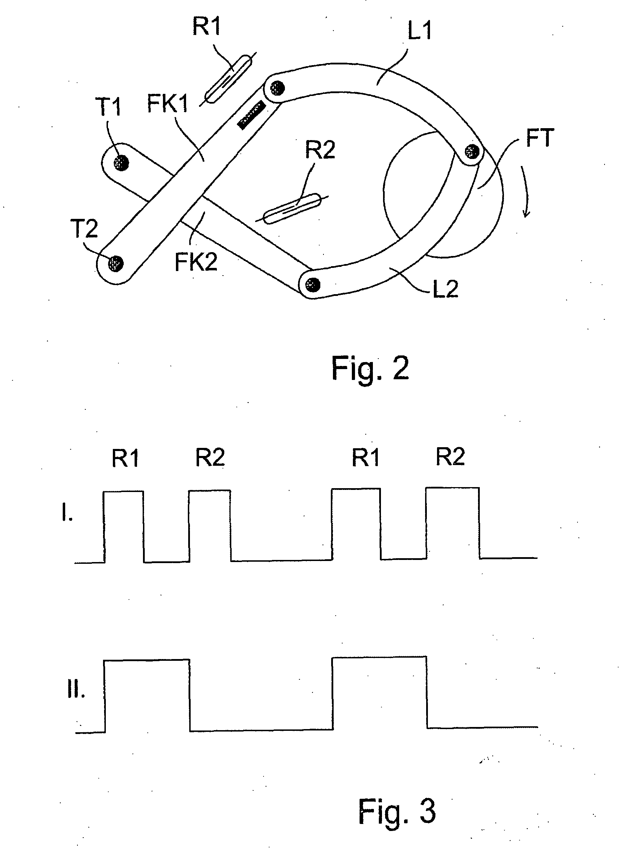

Fig. 2 shows a detail of the internal elements of a possible arrangement of a mechanical gas meter with diaphragm in a simplified schematic form. In this figure only the elements necessary for understanding the measuring arrangement of the invention are shown. A vertical axis T1, T2 perpendicular to the drawing plane is connected to each of the measuring chambers of the gas meter with a diaphragm. A swivel arm FK1, FK2 is fixed to the upper end of the axis T1, T2. The swivel arms FK1, FK2 are connected through swinging arms L1, L2 to a rotating disk FT. A mechanical measuring unit (for easier understanding not shown in the drawing) is connected to the rotating axis of the rotating disk FT through the drive with a calibrated/verified transmission ratio. In a no flow state the above mechanical structural elements do not perform any kind of movement. When gas flow starts, the vertical axis T1, T2 and the swivel arms FK1, FK2 fixed to them start to perform an alternating swinging movement. This swinging movement is converted to rotating movement by swinging arms L1, L2 that drive rotating disk FT in case of gas flow. The angular rotation of the rotating disk FT is proportional to the gas volume flown through. In the embodiment shown in Fig. 2, the safety control measuring arrangement senses the cyclic dislocation of the swivel arms FK1, FK2 performing alternating movement. For this purpose, a magnetic transmitter is attached to the swivel arm FK1 and an electromagnetic transmitter is attached in a fixed position relative to the housing in proximity of the magnetic transmitter. In the shown embodiment the magnetic transmitter comprises a permanent magnet M1 and the electromagnetic transmitter comprises reed relays R1, R2. During continuous gas flow the magnet M1 fixed to the swivel arm FK1 approximates alternately the reed relays R1, R2 located in proximity of the end positions thereof. The reed relays R1, R2 in proximity of the magnet M1 are actuated and thus its contacts extending into a gas-tight glass housing are closed. The reed relays R1, R2 and the magnet M1 are arranged relative to each other so that the magnet M1 alternately reaches a proximal position of reed relays R1 and R2 in the end positions of the rotating arm FK1. Therefore only one of the reed relays R1 of R2 is in an active actuated state, at a time. The concurrent actuation of both relays is practically excluded, such a state refers to a relay fault and can be used for error signalization.

The diagram shown in Fig. 3 illustrates the function of the reed relays R1, R2 during continuous gas flow. When gas flows through gas inlet into the measuring chamber, the swivel arms FK1, FK2 fixed to the vertical axis T1, T2 will rotate the rotating disk FT through swinging arms L1, L2 in direction of the arrow. During this, the magnet M1 alternately actuates the reed relays R1, R2. The active states of the reed relays correspond to positive pulses in the drawing, with a high state corresponding to a closed state of the relay contacts. The gas flow is followed by the rotation of the disk, during which the reed relays R1, R2 are operated in a predetermined order, as shown by the upper diagram I of Fig. 3. Eventual functional uncertainty of the reed relays R1, R2 may be eliminated by excluding the transient pulses by using an error correcting bistable circuit, e.g. an RS flip-flop connected to the output of the relays. The lower diagram II of Fig. 3 shows the output signal of the error correcting bistable circuit. If the change of the RS flip-flop is triggered by the rising edge of the control signal, the output state of the flip-flop changes at the starting time of the functioning of the relays R1, R2; that is one of the relays, such as R1 switches the bistable circuit "on" and the other relay, such as R2 switches it "off".

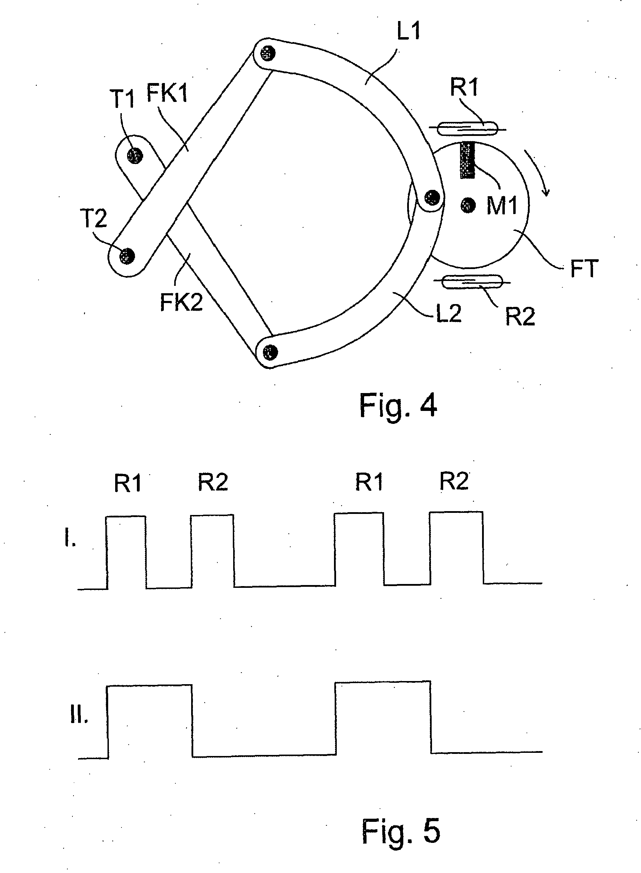

Fig. 4 shows a detail of the internal elements of a possible arrangement of a mechanical gas meter with diaphragm in a simplified schematic form similar to Fig. 2, but in another operating position. In the figures similar structural elements are designated with the same reference signs. In the embodiment shown in Fig. 4, the safety control measuring arrangement senses the cyclic dislocation of the rotating disk FT, performing rotating movement. For this purpose, a magnetic transmitter is attached to the rotating disk FT and electromagnetic transmitters are attached in a fixed position relative to the housing in proximity of the magnetic transmitter. In the shown embodiment the magnetic transmitter comprises a permanent magnet M1 and the electromagnetic transmitter comprises reed relays R1, R2. During continuous gas flow, the magnet M1 fixed to the rotating disk FT moves along the reed relays R1, R2 located in a predetermined angular position relative to each other in proximity of the circumference of the rotating disk FT. In the embodiment shown in Fig. 4, the reed relays R1, R2 enclose an angle of rotation of 180°. The reed relays R1, R2 in proximity of the magnet M1 are actuated and thus its contacts enclosed in a gas-tight glass housing are closed. The reed relays R1, R2 are located in a most distant location relative to each other for safe operation, thereby excluding the possibility of concurrent operation. The concurrent operation of both relays indicates a relay fault and can be used for error signalization.

The diagram shown in Fig. 5 illustrates the function of the reed relays R1, R2 during continuous gas flow. When gas flows through gas inlet into the measuring chamber, the swivel arms FK1, FK2 fixed to the vertical axis T1, T2 will rotate the rotating disk FT through swinging arms L1, L2 in direction of the arrow. During this, the magnet M1 alternately actuates the reed relays R1, R2. The active states of the reed relays correspond to positive pulses in the drawing, with a high state corresponding to a closed state of the relay contacts. The gas flow is followed by the rotation of the disk, during which the reed relays R1, R2 are operated in a predetermined order, as clearly seen in Fig. 5. Eventual functional uncertainty of the reed relays R1, R2 may be eliminated by excluding the transient pulses by using an error correcting bistable circuit, e.g. an RS flip-flop connected to the output of the relays. The lower diagram II of Fig. 5 shows the output signal of the error correcting bistable circuit. If the change of the RS flip-flop is triggered by the rising edge of the control signal, the output state of the flip-flop changes at the starting time of the functioning of the relays R1, R2; that is one of the relays, such as R1 switches the bistable circuit "on" and the other relay, such as R2 switches it "off".

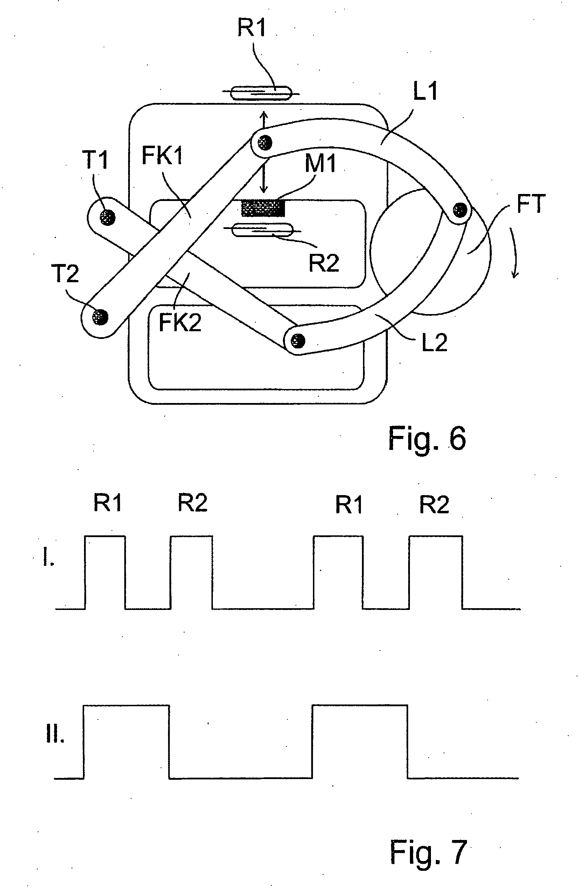

Fig. 6 shows in a simplified schematic form, the valves of the measuring chambers beside (or under) the internal structural elements of the mechanical gas meter with a diaphragm already discussed in detail above. In the figures similar structural elements are designated with the same reference signs. In the embodiment shown in Fig. 6, the safety control measuring arrangement senses the cyclic dislocation of the valve of the measuring chamber MK1, performing alternating movement. For this purpose, a magnetic transmitter is attached to the valve of the measuring chamber MK1, and an electromagnetic transmitters are attached in a fixed position relative to the housing in proximity of the magnetic transmitter. In the shown embodiment the magnetic transmitter comprises a permanent magnet M1 and the electromagnetic transmitters comprise reed relays R1, R2. During continuous gas flow the magnet M1 fixed to the valve of the measuring chamber MK1 approximates alternately the reed relays R1, R2 located in proximity of the end positions thereof. The reed relays R1, R2 in proximity of the magnet M1 are actuated and thus its contacts enclosed in a gas-tight glass housing are closed. The reed relays R1, R2 are located in a most distant location relative to each other for safe operation, thereby excluding the possibility of concurrent operation. The concurrent operation of both relays indicates a relay fault and can be used for error signalization:

The diagram shown in Fig. 7 illustrates the function of the reed relays R1, R2 during continuous gas flow. When gas flows through gas inlet into the measuring chamber with diaphragm, the swivel arms FK1, FK2 fixed to the vertical axis T1, T2 will rotate the rotating disk FT through swinging arms L1, L2 in direction of the arrow. During this, the magnet M1 alternately actuates the reed relays R1, R2. The active states of the reed relays correspond to positive pulses in the drawing, with a high state corresponding to a closed state of the relay contacts. The gas flow is followed by the rotation of the disk, during which the reed relays R1, R2 are operated in a predetermined order, as clearly seen in Fig. 7. Eventual functional uncertainty of the reed relays R1, R2 may be eliminated by excluding the transient pulses by using an error correcting bistable circuit, e.g. an RS flip-flop connected to the output of the relays. The lower diagram II of Fig. 7 shows the output signal of the error correcting bistable circuit. As the change of the RS flip-flop is triggered by the rising edge of the control signal, the output state of the flip-flop changes at the starting time of the functioning of the relays R1, R2; that is one of the relays, such as R1 switches the bistable circuit "on" and the other relay, such as R2 switches it "off".

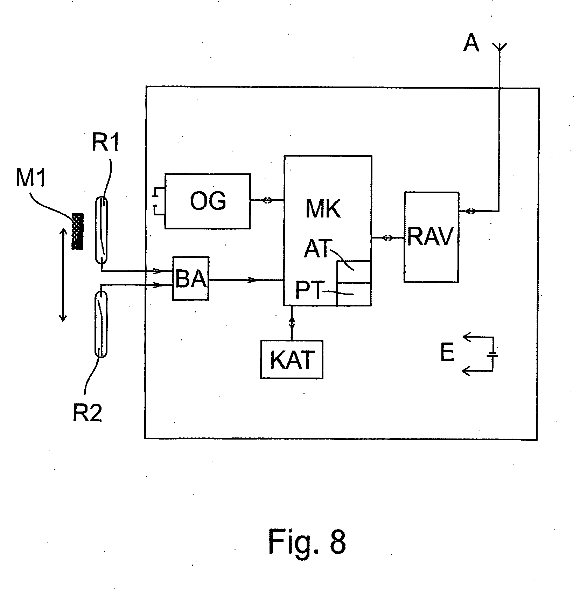

Fig. 8 a schematic block diagram of the electronic control and processing unit used in the safety control measuring arrangement according to the invention.

The output of the dislocation sensor comprising the magnet M1 and the reed relays R1, R2 already discussed in detail above, is connected to an input circuit BA of a control and processing unit. The input circuit BA comprises preferably an error correcting bistable circuit, such as an RS flip-flop, as already discussed in detail above. The output of the input circuit BA is connected to a suitable input of a microcontroller MK. The input circuit BA performs the required isolation, matching and conversion of the signal. The microcontroller MK comprises internally a data storage AT and a program storage PT. It is also possible to attach an external data storage KAT, in order to extend the data and/or program storing capacity of the microcontroller MK. Also connected to the microcontroller MK is a clock generator OG and a radio receiver-transmitter RAV comprising an antenna A. The clock generator OG provides the clock signals required by the microcontroller MK and the time base signal for measuring the time. The time and date values associated with the individual measuring results is determined by the microcontroller MK during execution of an internally stored program. The radio transmitter receiver unit RAV provides for the reading of the measuring results. The reading of the data requires of course an external radio transmitter receiver unit not shown in the drawing, that enables the reading of the measuring results, the identification data of the meter for an authorized person.

Before using the gas meter, the measuring values determined during calibration, that is the volume of gas flowing through the apparatus during one cycle, has to be fed into the control counter. Beside the measuring values, other data, such as actual date, time, name of the consumer, serial number of the meter, etc. may be added.

The power supply of the electronic control and processing unit can be accomplished by using a small size and high capacity E battery. The capacity of the E battery has to be chosen such that the power supply of the electronic components can be guaranteed without replacement for at least ten years.

The use safety control measuring arrangement of the invention enables the safety control of the mechanical gas meters. On the basis of the measuring values determined electronically it is possible to control the readings of the mechanical counter and therefore it is possible to detect a failure or a user manipulation.

## Claims

1. Electronic safety measuring arrangement for mechanical gas meters with a diaphragm comprising a pulse generating unit for generating pulses in response to the cyclic changes of a measuring unit performing alternating movement due to gas flow, wherein the number of pulses is equal to the number of cycles, **characterized in that** the electronic elements and the mechanical elements required for the measurements are integrated in the housing of the gas meter.

2. The gas meter of claim 1, **characterized in that** the elements for sensing the cyclic displacement comprise magnetic transmitters and associated electromagnetic signal converters.

3. The gas meter of claim 1 or 2, **characterized in that** it comprises a calibration value storage for storing a value corresponding to the gas volume flowing through the meter during one rotation cycle of the measuring unit.

4. The gas meter of claim 2 or 3, **characterized in that** the magnetic transmitter is attached to an element of the measuring unit performing alternating movement and the electromagnetic signal converter is attached in a fixed position relative to the housing.

5. The gas meter of any of claims 1 to 4, **characterized in that** the magnetic transmitter comprises a permanent magnet (M1) and the electromagnetic signal converter comprises a reed relay (R1, R2).

6. The gas meter of claim 5, **characterized in that** the permanent magnet (M1) and reed relays (R1, R2) are arranged in a configuration to avoid the concurrent operation of the relays.

7. The gas meter of claim 6, **characterized in that** an error correcting bistable circuit is connected to the output of the relays.

8. The gas meter of any of claims 1 to 6, **characterized in that** the counting unit is a program controlled counting unit, comprising an input circuit (BA), a program storage (PT), a data storage (AT), a clock signal generator (OG), a local power source (E), and a radio transmitter-receiver unit (RAV) connected to an antenna (A).

9. The gas meter of claim 8, **characterized in that** the input circuit comprises an error correcting bistable circuit.

10. The gas meter of claim 8 or 9, **characterized in that** the program controlled counting unit comprises an external data storage (KAT).
